# EUROPEAN PATENT SPECIFICATION

(11) **EP 3 368 761 B1**
(45) Date of publication and mention of the grant of the patent: **08.04.2020**
(21) Application number: 15788375.2
(22) Date of filing: 28.10.2015
(51) Int. Cl.: F02M 21/02, F02D 19/06, F02D 19/10

(54) **MULTIPLE-FUEL FEEDING SYSTEM OF AN INTERNAL COMBUSTION ENGINE AND METHOD OF OPERATING THE SYSTEM**
MULTIKRAFTSTOFFZUFUHR EINER BRENNKRAFTMASCHINE UND VERFAHREN ZUM BETREIBEN DESSELBEN
SYSTEME D'ALIMENTATION À MULTI-CARBURANT D'UN MOTEUR A COMBUSTION INTERNE ET PROCEDE DE FONCTIONNEMENT DU SYSTÈME

(43) Date of publication of application: 05.09.2018
(73) Proprietor: Wärtsilä Finland Oy, 65100 Vaasa (FI)
(72) Inventor: STEGAR, Christian, FI-65101 Vaasa (FI); HÄGGDAHL, Tore, FI-65101 Vaasa (FI); LASSILA, Jens, FI-65101 Vaasa (FI)
(74) Representative: TBK
(86) International application number: PCT/EP2015/075001
(87) International publication number: WO 2017/071746

(56) References cited:
- EP-A1- 1 529 953
- WO-A1-2014/111623
- WO-A1-2015/025078
- WO-A1-2015/025078
- CA-A1- 2 875 107
- GB-A- 671 438
- US-A1- 2010 332 106
- US-A1- 2014 182 559

## Description

The invention relates to a method of operating a multiple-fuel feeding system for an internal combustion engine according to the preamble of claim 1, e.g. of a vessel or a power plant, and to a multiple-fuel feeding system of an internal combustion engine.

Internal combustion engines used in both vessels and power plants are often using multiple fuels for operation. These fuels can be gaseous fuel (gas), such as liquefied natural gas (LNG), or conventional liquid marine fuels (diesels) like Marine Gasoil (MGO) and Heavy Fuel Oil (HFO). Typically, a multiple-fuel engine is operated either in gas mode or in diesel mode, i.e. as a dual-fuel engine. Due to lower emissions, better efficiency (lower consumption), lower visual smoke and environmental regulations, most users of dual-fuel engines run these engines in gas mode most of the time. In this mode gas is supplied to the engine as primary fuel to be combusted, which engine is operated as an Otto-engine. Additionally, a pilot fuel for igniting the gas is supplied to the engine. As pilot fuel MGO can be used, wherein the amount of pilot fuel consumed, i.e. combusted, is very small. When MGO is used as diesel for the diesel mode, i.e. when MGO is used as primary fuel to be consumed by the engine that is operated as a diesel engine, the pilot fuel supply can be ensured by branching off a fuel pipe from the diesel feeding system. In this case using a separate fuel feeding system for the pilot fuel is not necessary. Alternatively, in order to increase redundancy of the system, the pilot fuel feeding system can use the same tank but can be, apart from the tank, fully independent from the diesel feeding system. When HFO is used as diesel for diesel mode, the pilot fuel, e.g. MGO, is supplied using a completely independent feeding system being separated from the diesel feeding system, since HFO is not suitable for being used as pilot fuel. In this case, the engine is a so called tri-fuel engine using HFO, MGO and gas.

WO 2015/025078 A1 shows a method of operating a multiple-fuel feeding system for an internal combustion engine and the corresponding multiple-fuel feeding system of an internal combustion engine. The second fuel feeding subsystem comprises a first supply pump and fuel injection pumps for each fuel injectors.

In any type of engine being used for vessels or power plants, reliability is a major design criterion since a failure results in a loss of maneuverability or in a blackout. Therefore, when using a multiple-fuel engine, fast and smooth switching between fuel modes has to be ensured in case of a failure of one fuel supply system or when a system runs out of fuel (scheduled switching). For this reason, the diesel supply system of a conventional multiple-fuel engine has to run permanently in order to maintain sufficient viscosity of the diesel for feeding the diesel to the engine for combustion. As a consequence, even if the engine is mostly operated in gas mode, the backup diesel feeding system is constantly running in case of a sudden change to diesel mode. Thus, for safety reasons, the backup system constantly consumes power, which is a major drawback from financial and environmental perspective. Moreover, maintenance and inspection intervals of the components of the diesel supply system are thereby shortened. Accordingly, further costs are generated.

In view of the above, the object of the present invention is to provide a cost- and fuel-saving method of operating a multiple-fuel feeding system for an internal combustion engine, and a cost- and fuel-saving multiple-fuel feeding system of an internal combustion engine being adapted to fast and smoothly switch between fuel modes.

This object is achieved by a method of operating a multiple-fuel feeding system for an internal combustion engine having the features of claim 1 and by a multiple-fuel feeding system for an internal combustion engine having the features of claim 5. Advantageous further developments of the invention are set out in the dependent claims.

According to the invention a multiple-fuel feeding system of an internal combustion engine consists of a gas feeding system (gaseous fuel feeding system) and a diesel feeding system (liquid fuel feeding system). The diesel feeding system has at least one tank (liquid fuel tank), a pilot fuel feeding subsystem (first liquid fuel feeding subsystem) and a diesel feeding subsystem (second liquid fuel feeding subsystem).

In the gas mode (first fuel mode), the gas feeding system delivers gas to the engine for consumption, i.e. for combustion, and the pilot fuel feeding subsystem of the diesel feeding system delivers pilot fuel, e.g. MGO, for igniting the gas, i.e. also for consumption (combustion). In other words, the pilot fuel feeder pump (first feeder pump) is fully active, i.e. is operated at the speed that is required for the desired operating point of the engine (operating speed). Further, the diesel feeding subsystem of the diesel feeding system delivers diesel to the engine as well, but only for circulation, not for consumption. Due to this circulation, the diesel in the diesel feeding subsystem is kept in a state ready for consumption in case of a required change of the fuel mode to the diesel mode (second fuel mode), in which mode solely the diesel feeding system is used to deliver fuel to the engine for consumption. In order to keep the diesel circulating, the diesel feeder pump (second feeder pump) does not have to be fully active to make sure that the diesel is in a state ready for consumption, i.e. it does not have to operate at nominal speed. In fact, this pump is operated in the so called eco mode (economical mode), e.g. by using a frequency converter. In other words, when the dual-fuel feeding system is operated in the gas mode, the amount of diesel delivered to the engine is reduced, with the engine still being operated at the same operating point, as when the dual-fuel feeding system were operated in the diesel mode. However, in case of a dual-fuel engine, i.e. when the pilot fuel feeding subsystem is at least partially dependent on components of the diesel feeding subsystem, sufficient pressure in the diesel feeding system is ensured during operation in gas mode to maintain the required flow of the pilot fuel to the engine. In case of a tri-fuel engine, i.e. when the pilot fuel feeding subsystem is totally independent from the diesel feeding subsystem, only the pilot fuel feeder pump is operated at the operating speed, and the pressure in the diesel feeding subsystem can be reduced even further.

In order to change the fuel mode of the engine from gas mode to diesel mode, the control unit (controller) of the engine for example outputs a signal to the frequency converter of the diesel feeder pump to go to nominal operation. The lead time for the diesel supply subsystem, i.e. the time until it provides the desired fuel pressure, is short enough to keep the engine running without affecting the engine speed. In other words, due to the engine's inertia, the time period that is needed for the diesel feeder pump to run up (accelerate) from eco mode to nominal operation and to provide the system with the desired pressure, i.e. the lead time of the pump, is shorter than the time period that lapses until the engine speed starts to decrease. The magnitude order of the lead time might be between 2 to 8 seconds, depending on the eco mode and the kind of pump, but not more than 10 seconds. The magnitude order of the time period during which the engine speed remains constant even though the fuel pressure drops to 0 bar is at least 40 seconds, depending on the engine. Thus, the lead time of the pump is significantly shorter. Consequently, a fast and smooth change of fuel modes is possible without affecting the engine performance (output).

The above object is achieved by a multiple-fuel feeding system of an internal combustion engine having a diesel feeding system provided with an overhead tank (static fuel pressure tank) being a fuel buffer tank. More precisely, the overhead tank is arranged above the engine, e.g. in the vessel or the power plant, and is connected to the diesel feeding subsystem so as to ensure a hydrostatic head of about 0.5 to 1 bar, depending on the engine, if the tank is open or ventilated. In case of a closed tank, additional pressure can be exerted on the diesel feeding subsystem. The overhead tank can be filled up automatically, e.g. by using a pump, e.g. an external pump, and two level switches, one high level switch and one low level switch. As overhead tank, a bladder tank, a spring loaded tank or a membrane/diaphragm-type expansion tank could be used.

During transition from gas mode to diesel mode, the overhead tank delivers diesel to the engine via parts of the diesel feeding subsystem, e.g. via the fuel pipes, so as to compensate the lack of diesel that occurs due to the diesel feeder pump not being operated at nominal speed. In other words, the overhead tank provides the engine with additional diesel by using static pressure, i.e. it replenishes the reduced amount of diesel delivered to the engine for consumption until the diesel feeder pump reaches nominal speed and provides the required pressure. Optionally, when the pressure built up in the diesel feeding subsystem becomes higher than the static pressure of the overhead tank, e.g. a check valve prevents backflow of the diesel to the overhead tank. As a consequence, the lead time for the diesel supply system to build up the desired fuel pressure can be compensated. Thus, an even faster and smoother switch between fuel modes is possible on the one hand. On the other hand, the use of the overhead tank can be utilized to even further reduce the speed of the diesel feeder pump during operation in eco mode, when the engine is operated in gas mode, and still have the same lead time until a desired pressure is obtained. In fact, the diesel feeder pump can even be turned to the so called stand-by mode, i.e. into a non-operating state, without giving up the ability of a fast and smooth switch between gas mode and diesel mode. In the stand-by mode the pump is switched off and allows the diesel to flow through. As a result, the fuel consumption and additional costs can be further reduced.

However, because of the low pressure in the diesel feeding subsystem, the present invention only works for dual-fuel engines having the (almost fully) independent pilot fuel feeding subsystem not branching off the diesel feeding subsystem. This is because a specific pressure has to be maintained for the pilot fuel feeding subsystem. However, using a common fuel tank is possible. Likewise, this alternative is not suitable for tri-fuel engines using HFO as diesel for diesel mode because HFO has to be pumped around in a loop at a certain pressure level through a heat exchanger that is always employed when using HFO to prevent it from cooling down too much.

If any of the above diesel feeding systems additionally has a booster pump supporting the diesel feeder pump in the diesel feeding subsystem, this booster pump can be turned to the stand-by mode described above, when the engine is in the gas mode. This ensures maximum savings in costs and fuel. Alternatively, the booster pump can also be operated in the eco mode, e.g. by also using a frequency converter. This further improves the reliability (redundancy) of the system and still saves costs and fuel. Depending on the intended operating modes of the booster pump during gas mode and on the type of the booster pump, the overhead tank can be connected with the diesel feeding subsystem upstream or downstream of the booster pump.

The above described method of operating a multiple-fuel feeding system can be easily employed in both new and existing systems by using new controllers or reprogramming the existing ones. The required structural changes to the system, i.e. the installation of the overhead tank and eventually the new controllers and the frequency converters, as needed, are also easily possible within existing systems.

The invention is described below in detail by making reference to the enclosed drawings which illustrate some of the embodiments of the invention.
Fig. 1 shows a conventional dual-fuel feeding system for MGO and gas being operated in gas mode and diesel mode.
Fig. 2 shows a conventional tri-fuel feeding system for HFO, MGO and gas being operated in gas mode and diesel mode.
Fig. 3 shows a dual-fuel feeding system for MGO and gas according to a comparative example, which is useful for understanding the present invention, being operated in the gas mode.
Fig. 4 shows a dual-fuel feeding system for MGO and gas according to the example being operated in the gas mode with the diesel feeding subsystem being operated in an alternative mode as compared to the mode shown in Fig. 3.
Fig. 5 shows a dual-fuel feeding system for MGO and gas being operated in the gas mode and using the overhead tank according to the invention.
Fig. 6 shows a dual-fuel feeding system for MGO and gas being operated in the diesel mode and using the overhead tank according to the invention.
Fig. 7 shows a tri-fuel feeding system for HFO, MGO and gas according to a further comparative example, which is useful for understanding the present invention, being operated in the gas mode.
Fig. 8 shows a tri-fuel feeding system for HFO, MGO and gas according to the further example being operated in the gas mode with the diesel feeding subsystem being operated in an alternative mode as compared to the mode shown in Fig. 7.
Fig. 9 shows a characteristic of a pump, e.g. a diesel feeder pump or a booster pump.

In the drawings, solid lines depict systems/subsystems and components being fully active. Dashed lines denote the economical mode and dotted lines represent the stand-by mode (not in operation).

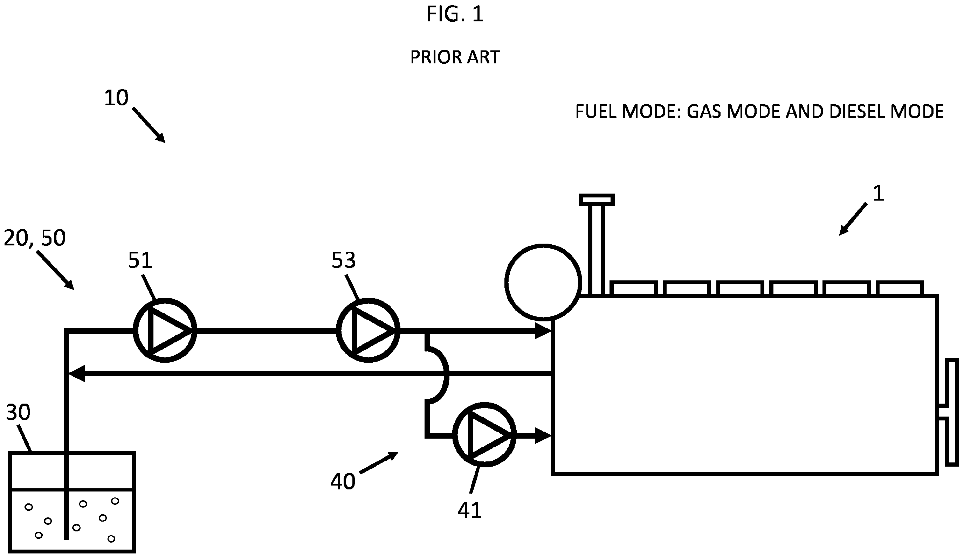

Further, the gas feeding system that is known in the art is not shown in the drawings. In other words, figures 1 to 8 only show the diesel feeding system of the engine.

Fig. 1 shows an internal combustion engine 1 having a conventional dual-fuel feeding system 10 for MGO and gas. Further, the diesel feeding system 20 with a pilot fuel feeding subsystem 40 and a diesel feeding subsystem 50 is shown, wherein the pilot fuel feeding subsystem 40 branches off the diesel feeding subsystem 50. Both the pilot fuel feeding subsystem 40 and a diesel feeding subsystem 50 are connected to the same MGO tank 30. The pilot fuel feeding subsystem 40 has a pilot fuel feeder pump 41 and the diesel feeding subsystem 50 has a diesel feeder pump 51 and a booster pump 53. Fig. 1 shows the conventional dual-fuel feeding system 10 being active regardless of the fuel mode of the internal combustion engine 1 for maintaining the desired viscosity (temperature) of the diesel. Further, the diesel feeder pump 51 and a booster pump 53 are always active, in order to provide the diesel to the pilot fuel feeding subsystem 40.

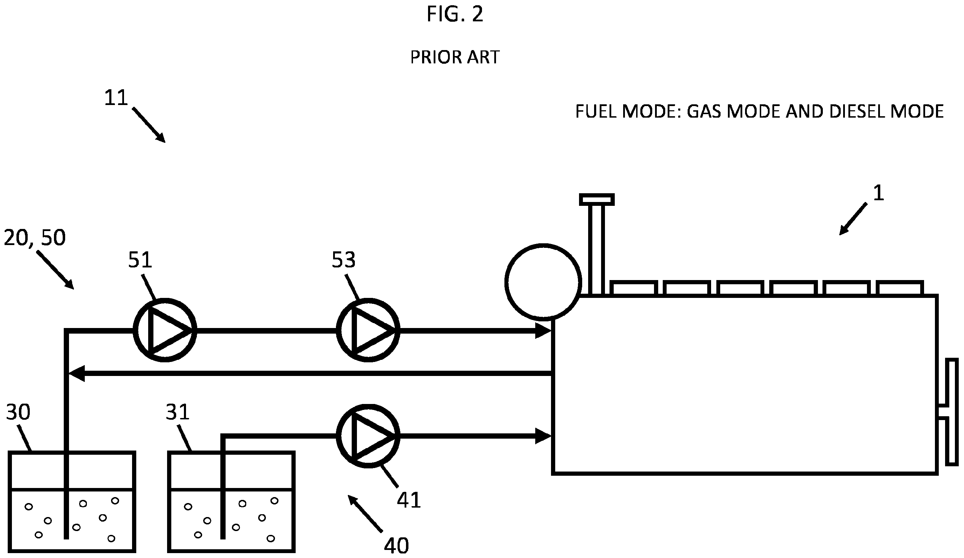

Fig. 2 shows an internal combustion engine 1 having a conventional tri-fuel feeding system 11 for HFO, MGO and gas. Basically, the structure is the same as the structure of the system in Fig. 1. However, in contrast to the system shown in Fig. 1, the conventional tri-fuel feeding system 11 has a pilot fuel feeding subsystem 40 that is completely independent from the diesel feeding subsystem 50, including a separate pilot fuel tank 31. The conventional tri-fuel feeding system 11 is operated substantially in the same manner as the conventional dual-fuel feeding system described above, i.e. the diesel feeding subsystem 50 is permanently fully active.

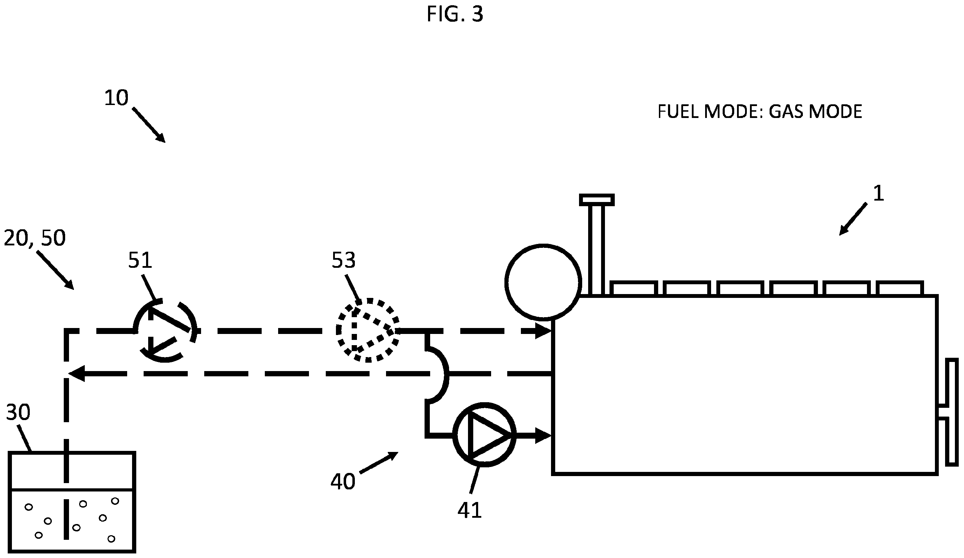

Fig. 3 shows an internal combustion engine 1 comprising a dual-fuel feeding system 10 according to the comparative example having the same structure as the system of Fig. 1. However, in contrast to this conventional system, in the system according to the example, only the pilot fuel feeding subsystem 40 is fully active, when the engine 1 is operated in gas mode. The diesel feeding subsystem 50 is turned to eco mode, while the booster pump 53, which is optional anyway, is not active, i.e. is in the stand-by mode. This method of operation of the diesel feeding system 20 results in high savings of costs and fuel without having negative impact on the reliability of the engine 1. In other words, switching from the gas mode shown in Fig. 3 to diesel mode is possible any time without reducing the output of the engine 1.

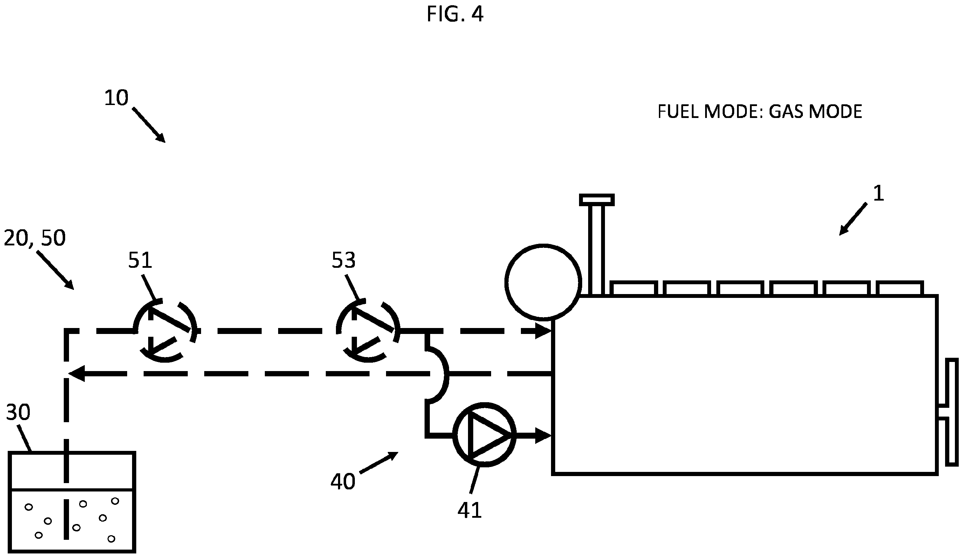

Fig. 4 shows the internal combustion engine 1 having the same dual-fuel feeding system 10 as presented in Fig. 3. The only difference as compared to the previously described system is that the optional booster pump 53 is operated in the eco mode. As a consequence, this method of operation of the diesel feeding system 20 results in lower savings of costs and fuel than the above method. However, it ensures higher redundancy of the diesel feeding subsystem 50 and shortens the lead time for the pressure to build up in case of a sudden change of fuel modes.

Since the structure of the above dual-fuel feeding systems 10 shown in Fig. 3 and Fig. 4 is basically the same as the conventional structure shown in Fig. 1, upgrading of engines that are already in use is relatively simple and, in view of the large savings, profitable. In particular, only the hardware and/or the software of the controller have to be upgraded (adapted) to achieve the desired effects.

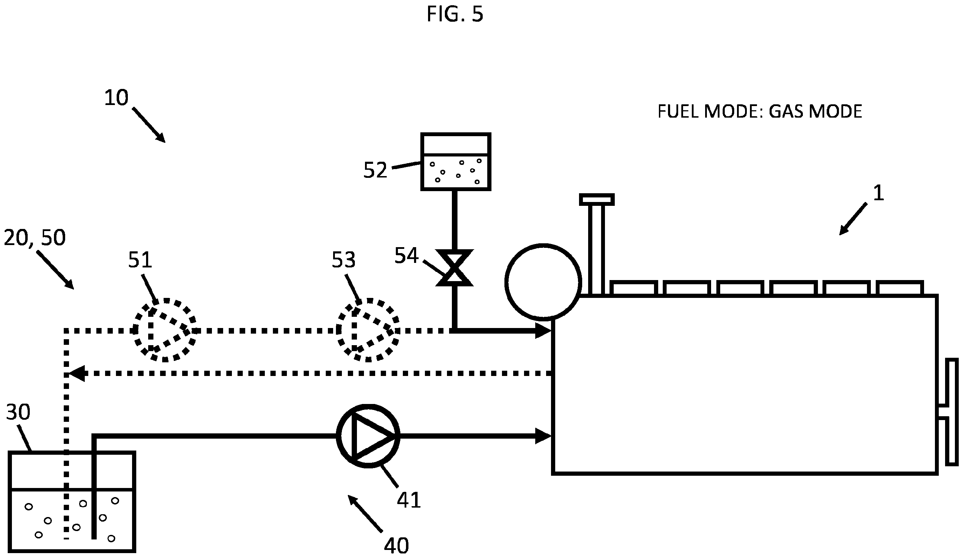

Fig. 5 shows an internal combustion engine 1 comprising a dual-fuel feeding system 10 according to the invention having a structure different from the structure presented above. In the embodiment shown in Fig. 5, the diesel feeding system 20 has a pilot fuel feeding subsystem 40 being independent from the diesel feeding subsystem 50. In addition to the components of the subsystem of the previously described embodiment, the diesel feeding subsystem 50 comprises an overhead tank 52 being connected to the fuel pipe of the diesel feeding subsystem 50 downstream of the booster pump 53. It should be noted that the overhead tank 52 could also be provided upstream of the booster pump 53. In order to protect the overhead tank 52 from pressure overload, a check valve 54 could be installed between the overhead tank 52 and the fuel pipe of the diesel feeding subsystem 50.

When the engine 1 is operated in the gas mode, as shown in Fig. 5, the diesel feeder pump 51 and the booster pump 53 are turned into the stand-by mode. The check valve 54 can be opened, as soon as the gas mode is activated, as shown in Fig. 5, in order to provide the desired pressure instantaneously to the engine 1 in the event of sudden switching to the diesel mode. On the other hand, the check valve 54 can also remain closed until switching to the diesel mode to prevent loss of fuel from the overhead tank 52 in case of a scheduled switching operation. Additionally, a structure could be installed to the diesel feeding subsystem 50 for refilling the overhead tank 52 by utilizing the pressure provided by the diesel feeder pump 51 and the booster pump 53 during diesel mode of the engine 1.

The multiple-fuel feeding system described above is even more efficient than the most efficient method of operation of a basically conventional system because, as shown in Fig. 5, both the diesel feeder pump 51 and the booster pump 53 can be turned to stand-by mode. Therefore savings of costs and fuel are maximal without any negative impact on the reliability of the engine 1.

The simple structure of the solution using the overhead tank allows upgrading of the engines that are already in use with only little efforts. In particular, only the overhead tank 52 and the necessary pipes have to be installed. Additionally, the controller has to be upgraded as described above. Further structural elements, such as the check valve 54, can be installed depending on the case.

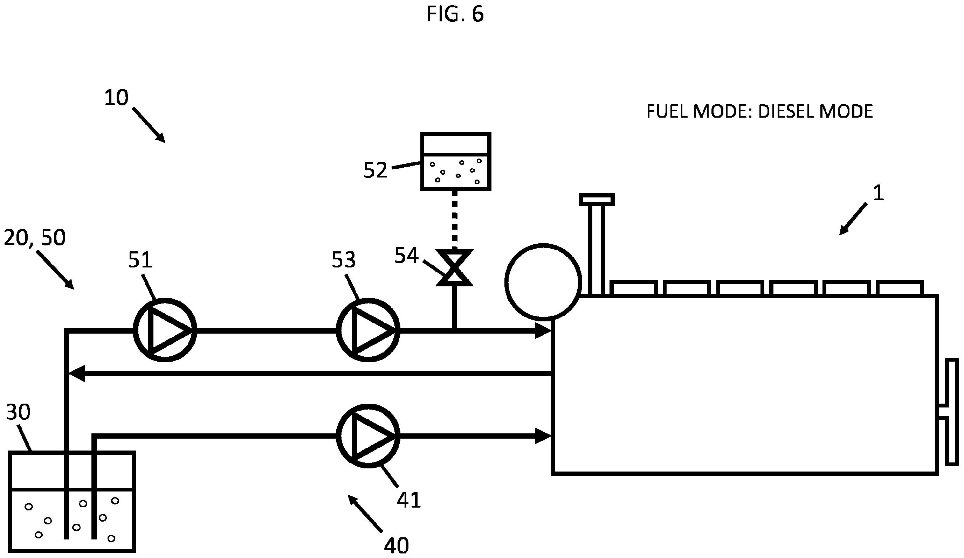

Fig. 6 shows the dual-fuel feeding system 10 according to the embodiment presented in Fig. 5 with the engine 1 being operated in the diesel mode. Contrary to the gas mode, both the diesel feeder pump 51 and the booster pump 53 are fully active and the check valve 54 is closed.

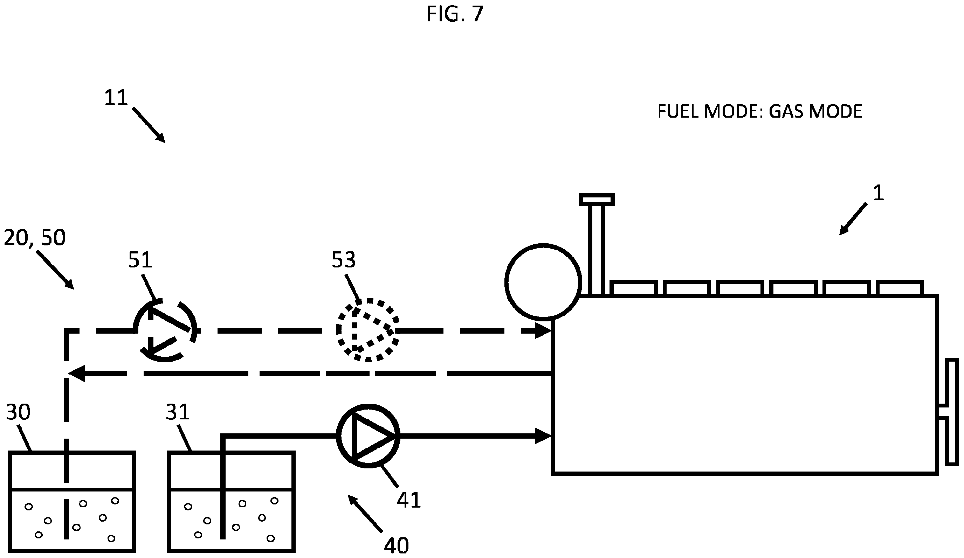

Fig. 7 shows the further comparative example. This further example shows an internal combustion engine 1 comprising a tri-fuel system 11 for HFO being supplied from the diesel tank 30, MGO being supplied from the pilot fuel tank 31, and gas having the same structure as the system of Fig. 2. However, in contrast to this conventional system, when the engine 1 is run in the gas mode, the diesel feeding subsystem 50 is in eco mode with the booster pump being in stand-by mode. This state of operation of the diesel feeding subsystem 50 is sufficient to keep even HFO in a state ready for consumption so that switching from gas mode to diesel mode is possible any time without reducing the output of the engine 1. The pilot fuel feeding subsystem 40 being completely independent from the diesel feeding subsystem 50 is fully active.

This method of operation of the diesel feeding system 20 results in high savings of costs and fuel without having negative impact on the reliability of the engine 1, similar to the embodiment of Fig. 3.

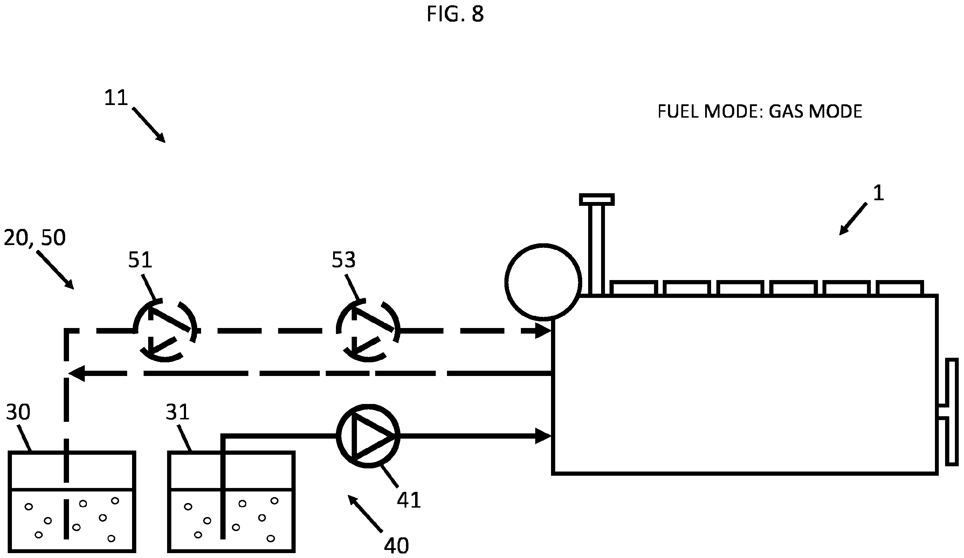

Fig. 8 shows the internal combustion engine 1 having the same tri-fuel feeding system 11 as presented in Fig. 7. The only difference as compared to the previously described system is that the optional booster pump 53 is operated in the eco mode. As a consequence, this method of operation of the diesel feeding system 20 results in lower savings of costs and fuel than the above method. However, it ensures higher redundancy of the diesel feeding subsystem 50 and shortens the lead time for the pressure to build up in case of a change of fuel modes.

Since the structure of the above tri-fuel feeding systems 11 is basically the same as the conventional structures, upgrading of engines that are already in use is relatively simple and, in view of the large savings, profitable. In particular, only the hardware and/or the software of the controller have to be upgraded (adapted) to achieve the desired effects.

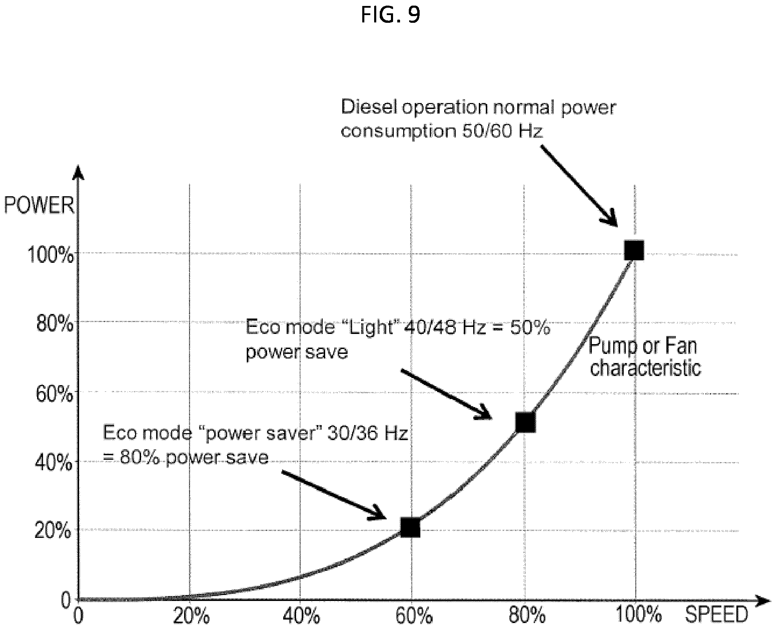

Fig. 9 shows a typical characteristic of a diesel feeder pump 51 or booster pump 53 operated with frequency converters. It is evident that even small speed reductions of the respective pump result in comparatively large impacts on its power consumption. For example, when decreasing the speed by 20% to 80% in total, the power consumption is about 50% of the power consumption of a pump in a conventional system being operated at nominal speed. This case is indicated in Fig. 9 as eco mode "light". Reducing the speed by another 20% to 60% in total, results in savings of power of about 80% as compared to a conventional system. This case is indicated in Fig. 9 as eco mode "power saver". Within existing conventionally structured systems, a speed reduction of up to 50% is possible, i.e. a reduction in power consumption of about 90% is possible, without any further modifications to the components of the system apart from the minor modifications as described above.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any example or embodiment above may be used in connection with another embodiment when such a combination is technically feasible.

### LIST OF REFERENCE SIGNS AND SHORT EXPLANATION OF THE DRAWINGS

- 1: internal combustion engine
- 10: dual-fuel feeding system
- 11: tri-fuel feeding system
- 20: diesel feeding system (liquid fuel feeding system)
- 30: diesel tank (liquid fuel tank)
- 31: pilot fuel tank (liquid fuel tank)
- 40: pilot fuel feeding subsystem (first liquid fuel feeding subsystem)
- 41: pilot fuel feeder pump (first feeder pump)
- 50: diesel feeding subsystem (second liquid fuel feeding subsystem)
- 51: diesel feeder pump (second feeder pump)
- 52: overhead tank (fuel buffer tank)
- 53: booster pump
- 54: check valve

solid line: fully active
dashed line: eco mode
dotted line: stand-by mode (not in operation)

## Claims

1. Method of operating a multiple-fuel feeding system (10, 11) for an internal combustion engine (1), said system (10, 11) comprising
a gaseous fuel feeding system, and
a liquid fuel feeding system (20) comprising
at least one liquid fuel tank (30),
a first liquid fuel feeding subsystem (40) comprising a first feeder pump (41), and
a second liquid fuel feeding subsystem (50) comprising a second feeder pump (51) for delivering liquid fuel to the engine (1) for consumption and circulation; wherein
the multiple-fuel feeding system (10, 11) is operable in
a first fuel mode using the gaseous fuel feeding system and the first liquid fuel feeding subsystem (40) while the second liquid fuel feeding subsystem (50) delivers liquid fuel to the engine (1) for circulation, and
a second fuel mode using the liquid fuel feeding system (20) with the second liquid fuel feeding subsystem (50) delivering liquid fuel to the engine (1) for consumption; and
when the multiple-fuel feeding system (10, 11) is operated in the first fuel mode, the amount of the liquid fuel delivered to the engine (1) is reduced, with the engine (1) being operated at the same operating point, as compared to the case when the multiple-fuel feeding system (10, 11) is operated in the second fuel mode; **characterized in that**
the second liquid fuel feeding subsystem (50) comprises
a fuel buffer tank (52); and **in that**
when the multiple-fuel feeding system (10) is operated in the first fuel mode, the lack of liquid fuel due to the reduced amount of the liquid fuel is compensated by and delivered from the fuel buffer tank (52).

2. Method according to claim 1, wherein
the second liquid fuel feeding subsystem (50) further comprises a booster pump (53), and when the multiple-fuel feeding system (10, 11) is operated in the first fuel mode, the booster pump (53) is shut off or is operated at a speed lower than when the multiple-fuel feeding system (10, 11) is operated in the second fuel mode at the same operating point of the engine (1).

3. Method according to claims 1 or 2, wherein
the liquid fuel feeding system (20) comprises another liquid fuel tank (31), and wherein the first liquid fuel feeding subsystem (40) and the second liquid fuel feeding subsystem (50) are supplied with fuel from different liquid fuel tanks (31, 30).

4. Method according to claims 1 or 2, wherein
the first liquid fuel feeding subsystem (40) and the second liquid fuel feeding subsystem (50) are both supplied with fuel from the same liquid fuel tank (30).

5. Multiple-fuel feeding system (10, 11) for an internal combustion engine (1), said system (10, 11) comprising
a gaseous fuel feeding system, and
a liquid fuel feeding system (20) comprising
at least one liquid fuel tank (30, 31),
a first liquid fuel feeding subsystem (40) comprising a first feeder pump (41), and
a second liquid fuel feeding subsystem (50) comprising
a second feeder pump (51) for delivering liquid fuel to the engine (1) for consumption and circulation; and
a fuel buffer tank (52); and
a controller arranged to operate the multiple-fuel feeding system (10, 11) in
a first fuel mode using the gaseous fuel feeding system and the first liquid fuel feeding subsystem (40) while the second liquid fuel feeding subsystem (50) is operated to deliver liquid fuel to the engine (1) for circulation, and
a second fuel mode using the liquid fuel feeding system (20) with the second liquid fuel feeding subsystem (50) being operated to deliver liquid fuel to the engine (1) for consumption by using the method of any one of claims 1 to 4.

6. System (10, 11) according to claim 5, wherein
the second liquid fuel feeding subsystem (50) further comprises a booster pump (53), and the controller is arranged to shut off the booster pump (53) or to operate the booster pump (53) at a speed lower than when the multiple-fuel feeding system (10, 11) is operated in the second fuel mode at the same operating point of the engine (1), when the multiple-fuel feeding system (10, 11) is operated in the first fuel mode.

7. System (10) according to claims 5 or 6, wherein
the fuel buffer tank (52) is a static fuel pressure tank providing a hydrostatic head of at least 0.5 bar.

8. System (10) according to claim 7, wherein
the static fuel pressure tank (52) is elevated as compared to the engine (1).

9. System (10) according to claim 7 or 8, wherein
the fuel buffer tank (52) is a bladder tank or a spring loaded tank.

10. System (10) according to any one of claims 5 to 9, wherein
the fuel buffer tank (52) is arranged downstream of the second feeder pump (51).

11. System (10) according to claim 10, wherein
the fuel buffer tank (52) is arranged downstream of the booster pump (53).

## Patentansprüche

1. Verfahren eines Betreibens eines Multikraftstoffzuführsystems (10, 11) für eine Brennkraftmaschine (1), wobei das System (10, 11) Folgendes aufweist:
ein Gaskraftstoffzuführsystem, und
ein Flüssigkraftstoffzuführsystem (20), das Folgendes aufweist:
mindestens einen Flüssigkraftstoffbehälter (30),
ein erstes Flüssigkraftstoffzuführsubsystem (40), das eine erste Zuführpumpe (41) aufweist, und
ein zweites Flüssigkraftstoffzuführsubsystem (50), das eine zweite Zuführpumpe (51) zum Liefern eines Flüssigkraftstoffs zu der Kraftmaschine (1) für einen Verbrauch und ein Zirkulieren aufweist; wobei das Multikraftstoffzuführsystem (10, 11) betreibbar ist in
einem ersten Kraftstoffmodus, der das Gaskraftstoffzuführsystem und das erste Flüssigkraftstoffzuführsubsystem (40) verwendet, während das zweite Flüssigkraftstoffzuführsubsystem (50) Flüssigkraftstoff zu der Kraftmaschine (1) für ein Zirkulieren liefert, und
einem zweiten Kraftstoffmodus, der das Flüssigkraftstoffzuführsystem (20) verwendet, wobei das zweite Flüssigkraftstoffzuführsubsystem (50) Flüssigkraftstoff zu der Kraftmaschine (1) für einen Verbrauch liefert; und
wenn das Multikraftstoffzuführsystem (10, 11) in dem ersten Kraftstoffmodus betrieben wird, die Menge des zu der Kraftmaschine (1) gelieferten Flüssigkraftstoffs reduziert ist, wobei die Kraftmaschine (1) an demselben Betriebspunkt betrieben wird, verglichen mit dem Fall, in dem das Multikraftstoffzuführsystem (10, 11) in dem zweiten Kraftstoffmodus betrieben wird; **dadurch gekennzeichnet, dass**
das zweite Flüssigkraftstoffzuführsubsystem (50)
einen Kraftstoffpufferbehälter (52) aufweist; und dass,
wenn das Multikraftstoffzuführsystem (10) in dem ersten Kraftstoffmodus betrieben wird, der Mangel an Flüssigkraftstoff aufgrund der reduzierten Menge des Flüssigkraftstoffs durch den Kraftstoffpufferbehälter (52) kompensiert wird und von diesem geliefert wird.

2. Verfahren nach Anspruch 1, wobei
das zweite Flüssigkraftstoffzuführsubsystem (50) ferner eine Verstärkerpumpe (53) aufweist, und wenn das Multikraftstoffzuführsystem (10, 11) in dem ersten Kraftstoffmodus betrieben wird, die Verstärkerpumpe (53) abgeschaltet ist oder bei einer Drehzahl betrieben wird, die niedriger ist als wenn das Multikraftstoffzuführsystem (10, 11) in dem zweiten Kraftstoffmodus bei demselben Betriebspunkt der Kraftmaschine (1) betrieben wird.

3. Verfahren nach Anspruch 1 oder 2, wobei
das Flüssigkraftstoffzuführsystem (20) einen anderen Flüssigkraftstoffbehälter (31) aufweist, und wobei das erste Flüssigkraftstoffzuführsubsystem (40) und das zweite Flüssigkraftstoffzuführsubsystem (50) mit Kraftstoff aus unterschiedlichen Flüssigkraftstoffbehältern (31, 30) beliefert werden.

4. Verfahren nach Anspruch 1 oder 2, wobei
das erste Flüssigkraftstoffzuführsubsystem (40) und das zweite Flüssigkraftstoffzuführsubsystem (50) beide mit einem Kraftstoff aus demselben Flüssigkraftstoffbehälter (30) beliefert werden.

5. Multikraftstoffzuführsystem (10, 11) für eine Brennkraftmaschine (1), wobei das System (10, 11) Folgendes aufweist:
ein Gaskraftstoffzuführsystem, und
ein Flüssigkraftstoffzuführsystem (20), das Folgendes aufweist:
mindestens einen Flüssigkraftstoffbehälter (30, 31),
ein erstes Flüssigkraftstoffzuführsubsystem (40), das eine erste Zuführpumpe (41) aufweist, und
ein zweites Flüssigkraftstoffzuführsubsystem (50), das Folgendes aufweist:
eine zweite Zuführpumpe (51) zum Liefern von Flüssigkraftstoff an die Kraftmaschine (1) für einen Verbrauch und ein Zirkulieren; und
einen Kraftstoffpufferbehälter (52); und
ein Steuerungsgerät, das eingerichtet ist, das Multikraftstoffzuführsystem (10, 11) zu betreiben in
einem ersten Kraftstoffmodus, der das Gaskraftstoffzuführsystem und das erste Flüssigkraftstoffzuführsubsystem (40) verwendet, während das zweite Flüssigkraftstoffzuführsubsystem (50) betrieben wird, um einen Flüssigkraftstoff an die Kraftmaschine (1) für ein Zirkulieren zu liefern, und
einem zweiten Kraftstoffmodus, der das Flüssigkraftstoffzuführsystem (20) verwendet, wobei das zweite Flüssigkraftstoffzuführsubsystem (50) betrieben wird, um einen Flüssigkraftstoff an die Kraftmaschine (1) für einen Verbrauch zu liefern,
indem es das Verfahren nach einem der Ansprüche 1 bis 4 verwendet.

6. System (10, 11) nach Anspruch 5, wobei
das zweite Flüssigkraftstoffzuführsubsystem (50) ferner eine Verstärkerpumpe (53) aufweist, und das Steuerungsgerät eingerichtet ist, die Verstärkerpumpe (53) abzuschalten oder die Verstärkerpumpe (53) bei einer Drehzahl zu betreiben, die niedriger ist als wenn das Multikraftstoffzuführsystem (10, 11) in dem zweiten Kraftstoffmodus an demselben Betriebspunkt der Kraftmaschine (1) betrieben wird, wenn das Multikraftstoffzuführsystem (10, 11) in dem ersten Kraftstoffmodus betrieben wird.

7. System (10) nach Anspruch 5 oder 6, wobei
der Kraftstoffpufferbehälter (52) ein Behälter für einen statischen Kraftstoffdruck ist, der eine hydrostatische Druckhöhe von mindestens 0,5 bar bereitstellt.

8. System (10) nach Anspruch 7, wobei
der Behälter für einen statischen Kraftstoffdruck (52) verglichen mit der Kraftmaschine (1) erhöht ist.

9. System (10) nach Anspruch 7 oder 8, wobei
der Kraftstoffpufferbehälter (52) ein Membranbehälter oder ein federbelasteter Behälter ist.

10. System (10) nach einem der Ansprüche 5 bis 9, wobei
der Kraftstoffpufferbehälter (52) stromabwärts der zweiten Zuführpumpe (51) angeordnet ist.

11. System (10) nach Anspruch 10, wobei
der Kraftstoffpufferbehälter (52) stromabwärts der Verstärkerpumpe (53) angeordnet ist.

## Revendications

1. Procédé de mise en œuvre d'un système d'alimentation à multi-carburant (10, 11) pour un moteur à combustion interne (1), dans lequel ledit système (10, 11) comprend :
un système d'alimentation en carburant gazeux, et
un système d'alimentation en carburant liquide (20) qui comprend :
au moins un réservoir de carburant liquide (30),
un premier système secondaire d'alimentation en carburant liquide (40) qui comprend une première pompe d'alimentation (41), et
un deuxième système secondaire d'alimentation en carburant liquide (50) qui comprend une deuxième pompe d'alimentation (51) pour délivrer du carburant liquide au moteur à combustion interne (1) pour la consommation et la circulation ; dans lequel
le système d'alimentation à multi-carburant (10, 11) peut être utilisé dans
un premier mode de carburant qui utilise le système d'alimentation en carburant gazeux et le premier système secondaire d'alimentation en carburant liquide (40) alors que le deuxième système secondaire d'alimentation en carburant liquide (50) délivre du carburant liquide au moteur à combustion interne (1) pour la circulation, et
un deuxième mode de carburant qui utilise le système d'alimentation en carburant liquide (20), le deuxième système secondaire d'alimentation en carburant liquide (50) délivrant du carburant liquide au moteur à combustion interne (1) pour la consommation ; et
lorsque le système d'alimentation à multi-carburant (10, 11) est mis en œuvre dans le premier mode de carburant, la quantité du carburant liquide délivré au moteur à combustion interne (1) est réduite, le moteur à combustion interne (1) étant mis en œuvre au même point de fonctionnement, comparé au cas dans lequel le système d'alimentation à multi-carburant (10, 11) est mis en œuvre dans le deuxième mode de carburant ; **caractérisé en ce que**
le deuxième système secondaire d'alimentation en carburant liquide (50) comprend :
un réservoir tampon de carburant (52) ; et **en ce que**
lorsque le système d'alimentation à multi-carburant (10) est mis en œuvre dans le premier mode de carburant, le manque de carburant liquide du fait de la quantité réduite du carburant liquide est compensé et celui-ci est délivré à partir du réservoir tampon de carburant (52).

2. Procédé selon la revendication 1, dans lequel
le deuxième système secondaire d'alimentation en carburant liquide (50) comprend en outre une pompe de suralimentation (53), et lorsque le système d'alimentation à multi-carburant (10, 11) est mis en œuvre dans le premier mode de carburant, la pompe de suralimentation (53) est coupée ou est mise en œuvre à une vitesse inférieure à celle lorsque le système d'alimentation à multi-carburant (10, 11) est mis en œuvre dans le deuxième mode de carburant au même point de fonctionnement du moteur à combustion interne (1).

3. Procédé selon la revendication 1 ou 2, dans lequel
le système d'alimentation en carburant liquide (20) comprend un autre réservoir de carburant liquide (31), et dans lequel le premier système secondaire d'alimentation en carburant liquide (40) et le deuxième système secondaire d'alimentation en carburant liquide (50) reçoivent du carburant qui provient de réservoirs de carburant liquide (31, 30) différents.

4. Procédé selon la revendication 1 ou 2, dans lequel
le premier système secondaire d'alimentation en carburant liquide (40) et le deuxième système secondaire d'alimentation en carburant liquide (50) reçoivent tous deux du carburant qui provient du même réservoir de carburant liquide (30).

5. Système d'alimentation à multi-carburant (10, 11) pour un moteur à combustion interne (1), dans lequel ledit système (10, 11) comprend :
un système d'alimentation en carburant gazeux, et
un système d'alimentation en carburant liquide (20) qui comprend :
au moins un réservoir de carburant liquide (30, 31),
un premier système secondaire d'alimentation en carburant liquide (40) qui comprend une première pompe d'alimentation (41), et
un deuxième système secondaire d'alimentation en carburant liquide (50) qui comprend :
une deuxième pompe d'alimentation (51) pour délivrer du carburant liquide au moteur à combustion interne (1) pour la consommation et la circulation ; et
un réservoir tampon de carburant (52) ; et
un contrôleur agencé pour mettre en œuvre le système d'alimentation à multi-carburant (10, 11) dans
un premier mode de carburant qui utilise le système d'alimentation en carburant gazeux et le premier système secondaire d'alimentation en carburant liquide (40) alors que le deuxième système secondaire d'alimentation en carburant liquide (50) est mis en œuvre pour délivrer du carburant liquide au moteur à combustion interne (1) pour la circulation, et
un deuxième mode de carburant qui utilise le système d'alimentation en carburant liquide (20), le deuxième système secondaire d'alimentation en carburant liquide (50) étant mis en œuvre pour délivrer du carburant liquide au moteur à combustion interne (1) pour la consommation en utilisant le procédé selon l'une quelconque des revendications 1 à 4.

6. Système (10, 11) selon la revendication 5, dans lequel
le deuxième système secondaire d'alimentation en carburant liquide (50) comprend en outre une pompe de suralimentation (53), et le contrôleur est agencé pour arrêter la pompe de suralimentation (53) ou pour mettre en œuvre la pompe de suralimentation (53) à une vitesse inférieure à celle lorsque le système d'alimentation à multi-carburant (10, 11) est mis en œuvre dans le deuxième mode de carburant au même point de fonctionnement du moteur à combustion interne (1), lorsque le système d'alimentation à multi-carburant (10, 11) est mis en œuvre dans le premier mode de carburant.

7. Système (10) selon la revendication 5 ou 6, dans lequel
le réservoir tampon de carburant (52) est un réservoir à pression statique de carburant qui fournit une charge hydrostatique d'au moins 0,5 bars.

8. Système (10) selon la revendication 7, dans lequel
le réservoir à pression statique de carburant (52) est élevé comparé au moteur à combustion interne (1).

9. Système (10) selon la revendication 7 ou 8, dans lequel
le réservoir tampon de carburant (52) est un réservoir souple ou un réservoir sollicité par ressort.

10. Système (10) selon l'une quelconque des revendications 5 à 9, dans lequel
le réservoir tampon de carburant (52) est agencé en aval de la deuxième pompe d'alimentation (51).

11. Système (10) selon la revendication 10, dans lequel
le réservoir tampon de carburant (52) est agencé en aval de la pompe de suralimentation (53).
